# EUROPÄISCHE PATENTSCHRIFT

(11) **EP 1 407 506 B1**
(45) Veröffentlichungstag und Bekanntmachung des Hinweises auf die Patenterteilung: **26.04.2006**
(21) Anmeldenummer: 02716714.7
(22) Anmeldetag: 01.02.2002
(51) Int. Cl.: H01M 8/04

(54) **VERFAHREN UND VORRICHTUNG ZUM ENTIONISIEREN VON KÜHLMEDIEN FÜR BRENNSTOFFZELLEN**
METHOD AND DEVICE FOR DEIONISING COOLING MEDIA FOR FUEL CELLS
PROCEDE ET DISPOSITIF POUR LA DESIONISATION DE MILIEUX REFRIGERANTS POUR DES PILES A COMBUSTIBLE

(30) Priorität: 02.02.2001 DE 10104771
(43) Veröffentlichungstag der Anmeldung: 14.04.2004
(73) Patentinhaber: BASF Aktiengesellschaft, 67056 Ludwigshafen (DE)
(72) Erfinder: KORMANN, Claudius, 67105 Schifferstadt (DE); FISCHER, Andreas, 67067 Ludwigshafen (DE)
(74) Vertreter: Kinzebach, Werner
(86) Internationale Anmeldenummer: PCT/EP2002/001074
(87) Internationale Veröffentlichungsnummer: WO 2002/063707

(56) Entgegenhaltungen:
- WO-A-00/17951
- US-A- 4 632 745
- US-A- 5 980 716
- PATENT ABSTRACTS OF JAPAN vol. 2000, no. 25, 12. April 2001 (2001-04-12) & JP 2001 236981 A (FUJI ELECTRIC CO LTD), 31. August 2001 (2001-08-31)

## Beschreibung

Die vorliegende Erfindung betrifft ein Verfahren zum Entionisieren von Kühlmedien für Brennstoffzellen, sowie eine Vorrichtung zur Durchführung des Verfahrens.

Brennstoffzellen sind Vorrichtungen, in denen ein Brennstoff, wie z.B. Methanol, Ethanol, Wasserstoff oder entsprechende Gemische, mit einem Verbrennungsmittel, wie z.B. reinem Sauerstoff, Luft, Chlor- oder Bromgas, kontrolliert verbrannt werden kann, wobei die dabei freigesetzte Reaktionsenergie nicht nur in thermische Energie, sondern auch in elektrische Energie umgewandelt wird. Brennstoffzellen werden seit mehreren Jahrzehnten insbesondere in der Raumfahrt zur Erzeugung elektrischer Energie eingesetzt. Aufgrund ihres hohen Wirkungsgrades, ihrer geringen oder völlig fehlenden Schadstoffemission und ihrer geringen Geräuschentwicklung im Betrieb, ist das Interesse am Einsatz von Brennstoffzellen auch in anderen Bereichen in den letzten Jahren stark gestiegen. Hier sind insbesondere der Fahrzeug- und der Kraftwerksbereich zu nennen.

Brennstoffzellen werden typischerweise nach der Art des Elektrolyten, der die Anoden- und die Kathodenkammer voneinander trennt, klassifiziert. Ein besonders interessanter Brennstoffzellentyp, der sich insbesondere für den Einsatz in kleineren Kraftwerken und für den mobilen Einsatz (beispielsweise als Fahrzeugantrieb) eignet, ist die Polymerelektrolyt-Brennstoffzelle. Bei dieser Art von Brennstoffzelle wird eine ionenleitfähige Membran als Elektrolyt verwendet. Eine einzelne Festpolymer-Brennstoffzelle umfasst im allgemeinen eine sogenannte Membran/Elektrode-Einheit (membrane electrode assembly, MEA), bei der eine ionenleitfähige Membran zwischen einer Kathode und einer Anode angeordnet ist. Die ionenleitfähige Membran dient dabei gleichzeitig als Trennwand und als Elektrolyt. An der Grenzfläche zwischen den Elektroden und der Membran sind Katalysatorpartikel angeordnet, welche die Umsetzungsreaktion in der Brennstoffzelle fördern. Die Elektroden stehen typischerweise mit porösen Stromsammlern in Kontakt, welche außerdem die Elektrodenstruktur stabilisieren und eine Zufuhr von Brennstoff und verbrennungsmittel erlauben. Da die Betriebsspannung einer Einzelzelle normalerweise weniger als 1 Volt beträgt, bestehen die meisten Brennstoffzellen aus einem Zellstapel, bei dem zur Erzeugung einer höheren Spannung zahlreiche aufeinandergestapelte Einzelzellen in Serie geschaltet sind. Die typische Betriebstemperatur einer Polymerelektrolyt-Brennstoffzelle liegt im Bereich von 100 °C. Höhere Temperaturen können zu einer Beschädigung der Membran führen. Da die elektrochemische Reaktion zwischen dem Brennstoff und den Verbrennungsmitteln exotherm verläuft, muss die Brennstoffzelle üblicherweise gekühlt werden, damit die gewünschte Betriebstemperatur eingehalten werden kann. Da eine relativ große wärmemenge bei nur geringer Temperaturdifferenz zur Umgebungstemperatur abgeführt werden muss, werden typischerweise flüssige Kühlmittel eingesetzt, die eine ausreichend hohe wärmekapazität besitzen. Daher sind wässrige Kühlmittel besonders gut geeignet.

Wässrige Kühlmittel weisen jedoch den Nachteil auf, dass sie bei den metallischen Bestandteilen des Kühlkreislaufs und der Brennstoffzelle zur Korrosion beitragen können. Außerdem stellt ein Kühlmedium, das eine gewisse elektrische Leitfähigkeit aufweist, ein sicherheitsproblem bei Brennstoffzellstapeln dar, die bei einer höheren Spannung, beispielsweise bei etwa 50 Volt, betrieben werden.

Da die elektrische Leitfähigkeit eines wässrigen Kühlmediums mit abnehmender Ionenkonzentration ebenfalls abnimmt, wurde bereits vorgeschlagen, entionisierte Kühlmedien für Brennstoffzellen zu verwenden. Beispielsweise ist aus US 5,200,278 oder WO 00/17951 bekannt, Ionentauscher im Kühlkreislauf anzuordnen, so dass das wässrige Kühlmittel für einen gewissen Zeitraum weitgehend frei von ionischen Verunreinigungen bleibt. Wird entionisiertes Wasser als Kühlmittel verwendet, so kann dieses gleichzeitig zur Befeuchtung der in die Brennstoffzelle strömenden Reaktionsteilnehmer verwendet werden, um eine ausreichende Hydratisierung der Polymermembran zu gewährleisten. Nachteilig an den bekannten Systemen ist allerdings, dass der Ionenaustauscher nach einer gewissen Betriebszeit erschöpft ist und ausgetauscht werden muss. Dies ist folglich mit einem hohen Wartungs und Kostenaufwand verbunden. In US-A-5 980 716 wird eine Brennstoffzellenanlage beschrieben, bei der Kühlwasser in einem Aufbreitungskreislauf mittels einer Elektrodeionisationsanlage kontinuierlich elektrochemisch entionisiert und bei Bedarf in einen Kühlmittelkreislauf eingespeist wird.

Aufgabe der vorliegenden Erfindung ist es daher, ein Verfahren zum Entionisieren eines Kühlmediums für eine Brennstoffzelle bereitzustellen, das einen weitgehend wartungsfreien energieoptimierten Betrieb ermöglicht.

Gelöst wird diese Aufgabe durch das Verfahren Entionisieren eines Kühlmediums einer Brennstoffzelle gemäß vorliegendem Anspruch 1. Erfindungsgemäß wird vorgeschlagen, das in einem ersten Kühlkreislauf zirkulierenden Kühlmedium intermittierend elektrochemisch zu entionisieren. Mit dem erfindungsgemäßen Verfahren arbeitet der Kühlkreislauf der Brennstoffzelle praktisch wartungsfrei. Sobald ein Leitfähigkeitssensor einen Anstieg der Leitfähigkeit des Kühlmediums registriert, was einer zunahme der Ionenkonzentration entspricht, kann Spannung an die Elektroden einer in dem Kühlkreislauf angeordneten elektrochemischen Zelle angelegt werden, welche einen Teil der Ionen aus dem Kühlkreislauf entfernt. Bevorzugt verwendet man Elektrodialysezellen, welche mit oder ohne Ionentauscher betrieben werden können. Werden Ionentauscher verwendet, so bezeichnet man die entsprechenden Zellen auch als Elektrodeionisationszellen. In derartigen Zellen finden die Entionisierung des Mediums und die Regeneration der Ionentauscher gleichzeitig statt.

In dem Kühlkreislauf sind ein oder mehrere Wärmetauscher angeordnet. Gemäß einer Variante der Erfindung ist der erste Kühlkreislauf gleichzeitig der einzige Kühlkreislauf und der oder die Wärmetauscher stehen beispielsweise mit Luft oder Wasser oder einem anderen geeigneten Kühlmedium in Kontakt. Der erste Kühlkreislauf kann allerdings auch als Primärkreislauf mit einem zweiten Kreislauf (Sekundärkreislauf) in thermischem Kontakt stehen.

Da bei Verwendung von Ionentauschern niedrigere Restleitfähigkeiten des Kühlmediums erreicht werden können als bei einer reinen Elektrodialyse, verwendet man bevorzugt Elektrodeionisationszellen und führt dabei das Kühlmedium als Diluatstrom durch die Zelle. Elektrodeionisationszellen sind an sich bekannt und werden beispielsweise zum Entsalzen von Meerwasser verwendet. Eine solche Elektrodeionisationszelle kann z.B. aus einem Mischbett aus Anionen- und Kationentauscherharzen bestehen. Gemäß einer anderen Variante werden Anionen- und Kationentauscherharze in zwei getrennten Kammern angeordnet. Die Ionentauscherpackungen werden von dem Diluat durchströmt und sind durch ionenselektive Membranen von dem Konzentratstrom getrennt.

Vorteilhaft kühlt man den Diluatstrom vor dem Entionisieren ab, um die Temperatur der mit den Ionentauscherkomponenten in Kontakt stehenden Lösungen niedrig zu halten. Dazu kann man beispielsweise die Elektrodeionisationszelle stromabwärts (bezogen auf die Strömungsrichtungen des Diluats) von den Kühlern oder Wärmetauschern des ersten Kühlkreislaufes anordnen.

Gemäß einer besonders bevorzugten Variante ist der erste Kühlkreislauf als Primärkühlkreislauf ausgestaltet, wobei der abgereicherte Diluatstrom mit den korrosionsgefährdeten Bauteilen in Kontakt kommt. Den Konzentratstrom der Elektrodeionisationszelle kann man dann in einem zweiten Kühlkreislauf, dem Sekundärkühlkreislauf, zirkulieren lassen und in einem Hauptwärmetauscher abkühlen. Den abgekühlten Konzentratstrom kann man anschließend zum Abkühlen des Diluatstroms verwenden. Der Sekundärkreislauf des Konzentratstroms kann eine wasserzufuhr aufweisen, mit der Wasserverluste, die im Betrieb bei der Regeneration der Ionentauscher entstehen, ausgeglichen werden können. Bei dieser Variante wird bevorzugt über einen Primärkühler die Wärme des Diluatstroms nach Verlassen der Brennstoffzelle an den Sekundärkreislauf mit dem Konzentrationsstrom abgeführt. Anschließend durchläuft der gekühlte Diluatstrom die Elektrodeionisationszelle. Der aufgeheizte Konzentrationsstrom wird über den Hauptkühler und anschließend in die Elektrodeionisationszelle geleitet, wo er die aus dem Diluat migrierenden Ionen aufnimmt.

Die mit dem erfindungsgemäßen Verfahren erzielbaren ionischen Leitfähigkeiten im abgereicherten Diluatstrom liegen abhängig von der Eingangsleitfähigkeit üblicherweise unter 1 µS/cm. Es können sogar Leitfähigkeiten von unter 0,1 µS/cm erreicht werden.

Gegenstand der vorliegenden Erfindung ist auch ein Brennstoffzellenaggregat mit wenigstens einer Brennstoffzelle und einem ersten Kühlkreislauf für die Brennstoffzelle, wobei das Brennstoffzellenaggregat dadurch gekennzeichnet ist, dass in dem Kühlkreislauf wenigstens eine Elektrodeionisationszelle angeordnet ist, die von einem als Kühlmedium dienenden Diluatstrom und einem Konzentratstrom in durchströmt wird, wobei in dem Kühlkreislauf ein Leitfähigkeitssensor angeordnet ist, der über einen Schalter eine von einer Spannungsquelle gelieferte Gleichspannung auf die Elektroden der Elektrodeionisationszelle schaltet. Es können verschiedenste, an sich bekannte Elektrodeionisationszellen verwendet werden (vgl. beispielsweise Ganzi et al. "Electrodeionization", *Ultrapure Water,* July/August 1997).

Für die Elektroden der Elektrodeionisationszellen können geeignete Materialien wie z.B. Edelmetalle, insbesondere Platin, Metalloxide oder Graphite verwendet werden. Die Kathoden können beispielsweise auch aus Stahl oder Nickel bestehen. Der Abstand zwischen den Membranen beträgt üblicherweise mehrere hundert µm bis wenige cm. Die Stromdichten sind abhängig von der Restleitfähigkeit der Lösungen und können wenige mA/m² bis mehrere A/m² betragen. Bei einem kontinuierlichen Betrieb liegt der Energiebedarf einer solchen Elektrodeionisationszelle bei unter einem Watt pro Liter Lösung.

Gemäß einer Variante der Erfindung weisen die Kammern der Elektrodeionisationszelle keine Ionentauscherpackungen auf. In diesem Fall wird die Zelle als reine Elektrodialysezelle betrieben. Die erreichbaren Restleitfähigkeiten sind jedoch höher als im Falle einer vergleichbaren Elektrodeionisationszelle mit Ionentauscherpackungen.

Besonders bevorzugt sind jedoch Ionentauscherpackungen vorgesehen. Der Ionentauscher kann beispielsweise aus einem Mischbett aus Anionen- und Kationentauscherharzen bestehen, welches kathodenseitig durch eine Kationentauschermembran und anodenseitig durch eine Anionentauschermembran begrenzt ist. Die Packungen wird von dem abzureichernden Diluatstrom durchströmt. Die Ionentauschermembranen sind auf der dem Ionentauscherbett gegenüberliegenden Seite in Kontakt mit dem Konzentratstrom, der gleichzeitig in Kontakt mit den Elektroden steht, zwischen welchen das elektrische Feld aufgebaut wird. Diese Variante bietet die Möglichkeit, mehrere Diluat- und Konzentratkammern alternierend aufzubauen, um bei gleicher Elektrodenfläche einen höheren Volumendurchsatz zu ermöglichen.

Gemäß einer anderen Variante werden Kationentauscher- und Anionentauscherharze in zwei getrennten Kammern vom Diluat durchströmt. Die Kationentauscherharzpackung wird dabei auf einer Seite von einer Kationentauschermembran vom Konzentratstrom und auf der anderen Seite von einer sogenannten bipolaren Membran von der Anionentauscherharzpackung abgegrenzt. An der bipolaren Membran werden Protonen auf der Seite der Kationentauscherharzpakkung und Hydroxylionen auf der Seite der Anionentauscherharzpakkung freigesetzt. Die Anionentauscherharzpackung wird ihrerseits von einer Anionentauschermembran vom Konzentratstrom abgegrenzt.

Bevorzugt umspült der Konzentrationsstrom die Elektroden der Elektrodeionisationszelle. Wenn Bestandteile des Konzentratstroms empfindlich gegen Elektrodenreaktionen sind, kann man beispielsweise die Elektroden durch eine einfache ionenselektive Membran abschirmen, so dass auch anodisch bzw. kathodisch instabile Komponenten im Konzentratstrom vorliegen können. So kann man beispielsweise Glykole als Frostschutz zusetzen. Das Kühlmedium kann auch noch zusätzliche Korrosionsinhibitoren enthalten, wie zum Beispiel die in der Patentanmeldung DE-A 100 63 951 beschriebenen ortho-Kieselsäureester. Die ortho-Kieselsäureester haben vorzugsweise vier gleiche Alkoholat-Substituenten, der Form Tetra(Alkoholat)silan. Typische Beispiel für geeignete Kieselsäureester sind reine Tetraalkoxysilane, wie Tetramethoxysilan, Tetraethoxysilan, Tetra(n-propoxy)silan, Tetra(iso-propoxy)silan, Tetra(n-butoxy)silan, Tetra(tert.-butoxy)silan, Tetra(2-ethylbutoxy)silan, Tetra(2-ethylhexoxy)silan oder Tetra[2-[2-(2-methoxyethoxy)ethoxy]ethoxy]silan. Die genannten Substanzen sind entweder kommerziell erhältlich oder durch einfache Umesterung eines Äquivalentes Tetramethoxysilan mit vier Äquivalenten des entsprechenden längerkettigen Alkohols oder Phenols durch Abdestillieren von Methanol herstellbar.

Als Kationentauschermembranen eignen sich insbesondere perfluorierte Membranen, wie beispielsweise Nafion®117, welches von der Firma DuPont hergestellt wird. Durch die Membranen diffundierendes Wasser wird durch Anlegen einer elektrischen Spannung an den gasentwickelnden Elektroden zu Wasserstoff bzw. Sauerstoff zersetzt. Gemäß einer weiteren Variante können auch Gasdiffusionselektroden eingesetzt werden, welche anodenseitig zugeführten Wasserstoff zu Protonen umsetzen und kathodenseitig Sauerstoff zu Wasser reduzieren. Bei einer derartigen Variante kann die Elektroden/Membran-Einheit direkt an den Diluatstrom angrenzen.

Die vorliegende Erfindung wird im folgenden unter Bezugnahme auf in den beigefügten Zeichnungen in dargestellte Ausführungsbeispiele ausführlicher erläutert.

In den Zeichnungen zeigt:
- Figur 1: eine schematische Darstellung eines ersten Ausführungsbeispiels eines erfindungsgemäßen Brennstoffzellenaggregats mit einem Kühlkreislauf, in welchem eine Elektrodeionisationszelle angeordnet ist;
- Figur 2: eine detailliertere Darstellung der Elektrodeionisationszelle aus Figur 1, bei welcher der Ionentauscher als Mischbettpackung ausgebildet ist;
- Figur 3: eine Variante der Figur 2, bei welcher der Ionentauscher separate Kammern für Anionen- bzw. Kationentauscherharze aufweist;
- Figur 4: eine weitere Variante der Figur 2, bei welcher eine Membran-Elektroden-Einheit vorgesehen ist; und
- Figur 5: eine schematischen Darstellung eines zweiten Ausführungsbeispiels eines erfindungsgemäßen Brennstoffzellenaggregats, bei welchem der Konzentratstrom einen Sekundärkühlkreislauf bildet.

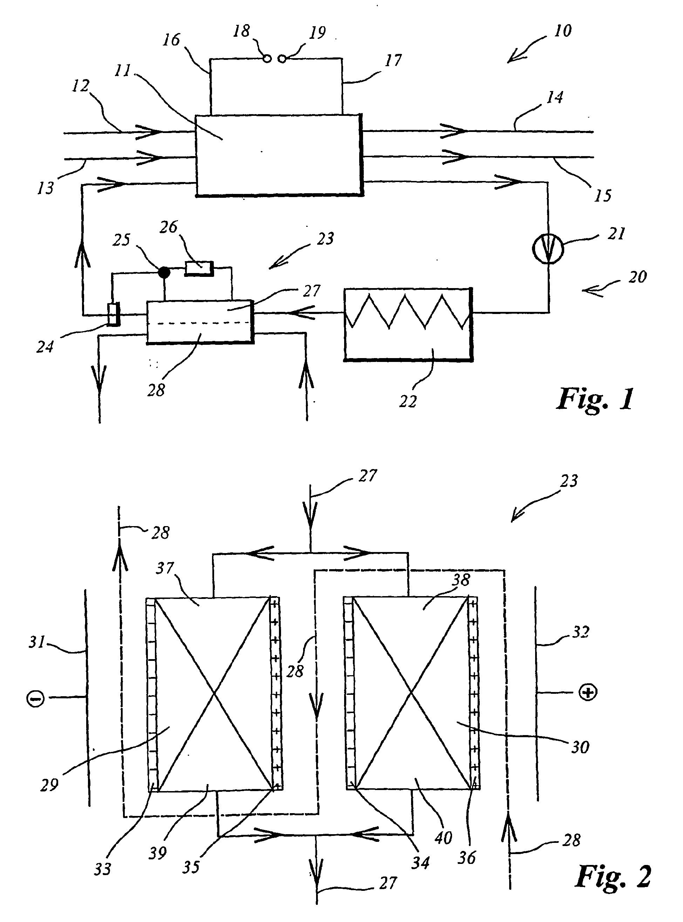

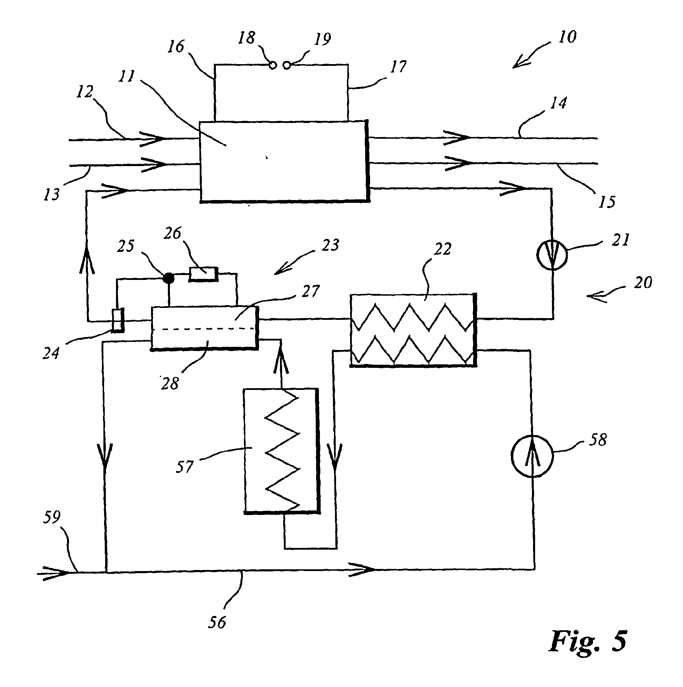

In Fig. 1 ist ein erfindungsgemäßes Brennstoffzellenaggregat 10 schematisch dargestellt. Das Brennstoffzellenaggregat 10 umfasst einen Brennstoffzellenstapel 11, der Zufuhrleitungen für den Brennstoff 12, beispielsweise Wasserstoffgas, und Zufuhrleitungen für das verbrennungsmittel 13, beispielsweise Luft oder Sauerstoff, aufweist. Bei der Zufuhr von gasförmigen Substanzen wird zumindest eines der zugeführten Gase vor der Einleitung in den Brennstoffzellenstapel 11 befeuchtet, um ein Austrocknen der Polymermembranen zu verhindern. Die Reaktionsprodukte können den Brennstoffzellenstapel 11 über Auslassleitungen 14,15 verlassen. Wird die Brennstoffzelle mit reinem Wasserstoff und Sauerstoff betrieben, so entsteht als Reaktionsprodukt Wasser, welches teilweise zum Befeuchten der über die Leitungen 12 und 13 einströmenden Gase verwendet werden kann. Im Fall der in Fig. 5 dargestellten Variante mit sekundärem Kühlkreislauf kann ein anderer Teil des entstehenden Wassers auch zum Ausgleich der im sekundären Kühlkreislauf auftretenden Wasserverluste verwendet werden, wie weiter unten detaillierter beschrieben werden wird. Der von dem Brennstoffzellenstapel 11 erzeugte Strom kann über Sammelleitungen 16,17 zu positiven bzw. negativen Anschlussklemmen 18,19 geführt werden.

Das Brennstoffzellenaggregat 10 weist einen ersten Kühlkreislauf auf, der insgesamt mit der Bezugsziffer 20 bezeichnet ist. Als Kühlmittel kann beispielsweise Wasser verwendet werden, welches je nach Einsatzgebiet weitere Hilfsstoffe, wie beispielsweise Frostschutzmittel oder Korrosionsinhibitoren enthalten kann. In dem Kühlkreislauf ist eine Umwälzpumpe 21 angeordnet, welche die Förderung des Kühlmediums bewirkt. Das Kühlmedium wird durch einen Wärmetauscher 22 transportiert, welcher beispielsweise mit Umgebungsluft in thermischem Kontakt steht. Es kann jedoch auch, wie im Zusammenhang mit Fig. 5 beschrieben wird, ein thermischer Kontakt zu einem zweiten Kühlkreislauf realisiert werden. Stromabwärts von dem Wärmetauscher 22 ist bei dem erfindungsgemäßen Brennstoffzellenaggregat eine Elektrodeionisationszelle 23 angeordnet, welche die Ionenkonzentration im Kühlmittelkreislauf 20 verringert. Die Elektrodeionisationszelle 23 kann intermittierend betrieben werden. Erfindungsgemäß wird im Kühlkreislauf 20 ein Leitfähigkeitssensor 24 angeordnet, welcher über einen Schalter 25 eine von einer Spannungsquelle 26 gelieferte Gleichspannung auf die Elektroden der Elektrodeionisationszelle schaltet.

Das Kühlmedium des Kühlkreislaufs 20 fließt als sogenannter Diluatstrom 27 durch die Elektrodeionisationszelle 23. Ionen werden in dem Diluatstrom 27 abgereichert und in einem ebenfalls durch die Zelle 23 geführten Konzentratstrom 28 angereichert. Ein besonderer vorteil der Elektrodeionisationszelle ist darin zu sehen, dass im Betrieb gleichzeitig mit der Entionisierung des Diluats eine Regeneration der in der Zelle vorzugsweise angeordneten Ionentauscher stattfindet. Eine Erschöpfung des Ionentauschers, wie sie beispielsweise bei dem in WO 00/17951 beschriebenen Verfahren auftritt, wird bei der erfindungsgemäß vorgesehenen Verwendung einer Elektrodeionisationszelle zum Entionisieren vermieden. Der für die Entsalzung und Regeneration erforderliche Energieaufwand ist relativ gering, so dass die Zelle vorteilhaft auch kontinuierlich betrieben werden kann. Je nach Eingangsleitfähigkeit des Kühlmittels werden mit einer Leistung von weniger einem Watt pro Liter Lösung Ausgangsleitfähigkeiten von unter 1 µS/cm und sogar bis herab zu 0,1 µS/cm erreicht (zum Vergleich sei angemerkt, dass im Dissoziationsgleichgewicht von reinem Wasser die minimal erreichbare Restleitfähigkeit ca. 0,05 µS/cm beträgt).

Es können unterschiedlichste an sich bekannte Elektrodeionisationszellen in dem erfindungsgemäßen Verfahren eingesetzt werden. Die Funktionsweise einer Elektrodeionisationszelle und typische Ausführungsbeispiele derartiger Zellen werden im folgenden unter Bezugnahme auf die Fig. 2 bis 4 kurz beschrieben.

Prinzipiell besteht eine Elektrodeionisationszelle aus einem Membranstapel, in welchen anionen- und kationenpermeable Ionentauschermembranen alternierend angeordnet sind. Durch Abstandshalter werden zwischen den Membranen parallele Fließkanäle gebildet. Jeder zweite Kanal ist mit Ionentauscherharz in dichter Packung befüllt. Durch die Ionentauscherpackungen fließt das abzureichernde Diluat, während in den dazwischen liegenden Kanälen das Konzentrat geführt wird, in welchem die aus dem Diluat entfernten Ionen angereichert werden. Der Membranstapel wird durch ein Elektrodenpaar begrenzt, über das transversal ein Gleichspannungsfeld angelegt wird.

In der in Fig. 2 dargestellten Ausführungsform wird das Diluat 27 durch mehrere Kanäle 29,30 geleitet, die jeweils mit einem Mischbett aus Anionen- und Kationentauscherharzen gefüllt sind. Der Membranstapel wird von einer Kathode 31 und einer Anode 32 begrenzt. Die Ionentauscherpackungen sind kathodenseitig durch eine Kationentauschermembran 33,34 und anodenseitlich durch eine Anionentauschermembran 35,36 begrenzt. Zwischen den einzelnen Diluatkanälen 29, 30 wird der Konzentratstrom 28 geführt. Unter dem Einfluss des elektrischen Feldes werden die Ionen über das Ionentauscherharz und die Membranen aus dem Diluatkanal in den Konzentratkanal übergeführt. Durch den alternierenden Aufbau von Diluat- und Konzentratkanälen ist es möglich, bei gegebener Elektrodenfläche einen höheren Volumendurchsatz zu erreichen. Im Eintrittsbereich 37,38 des Diluats in die Kanäle 29,30 werden Kationen über die kationenpermeable Membran 33,34 und Anionen über die anionenpermeable Membran 35,36 in den Konzentratkanal 28 überführt. Im Austrittsbereich 39,40 tritt dagegen vermehrt die Dissoziation von Wasser auf, wobei die gebildeten Protonen und Hydroxylionen die Ionentauscher in die H⁺- bzw. OH⁻-Form überführen. Die im Eingangsbereich freigesetzten Ionen werden über die Harzoberfläche weitergeleitet, so dass gleichzeitig mit der Entionisierung eine Regeneration der Ionentauscherharze gewährleistet ist.

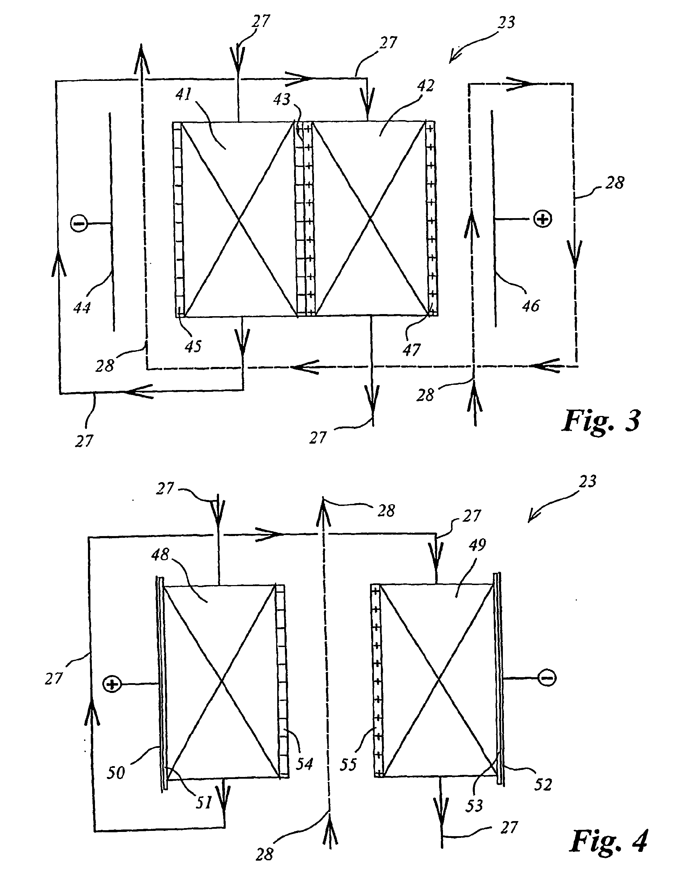

Bei der in Fig. 3 dargestellten Variante der Elektrodeionisationszelle 23 liegt im Gegensatz zur Variante der Fig. 2 kein Mischbett vor, sondern das Kühlmedium für die Brennstoffzelle wird als Diluat 27 zunächst durch eine Kationentauscherharzpakkung 41 und anschließend durch eine Anionentauscherharzpackung 42 geleitet. Im dargestellten Beispiel sind die Packungen 41 und 42 als Doppellage ausgebildet und werden durch eine sogenannte bipolare Membran 43 voneinander getrennt. An der bipolaren Membran 43 werden Protonen auf der Seite der Kationentauscherharzpackung 41 und Hydroxylionen auf der Seite der Anionentauscherharzpackung 42 freigesetzt. Die Kationentauscherharzpackung 41 wird zu Kathode 44 hin von einer kationenpermeablen Membran 45 begrenzt, während die Anionentauscherharzpackung 42 zur Anode 46 hin von einer anionenpermeablen Membran 47 begrenzt wird. Die Harzdoppellage wird demnach nur an ihrer Ober- und Unterseite von dem Konzentrat 28 umströmt.

In den dargestellten Beispielen lassen sich die Elektroden durch geeignete Membranen gegen die Konzentratlösung abschirmen, so dass auch anodisch bzw. kathodisch instabile Komponenten im Konzentratstrom vorliegen können. Die Kathode lässt sich beispielsweise durch eine anionenpermeable Membran und die Anode und eine kationenpermeable Membran abschirmen. Das erfindungsgemäße Verfahren und die erfindungsgemäße Vorrichtung eignen sich daher insbesondere zur Entionisierung von Kühlmitteln von Brennstoffzellen, die aufgrund ihres Anwendungsbereichs mit Frostschutzmitteln versetzt werden müssen. So ist die Erfindung für Anwendungen im Automobilbereich besonders geeignet, da beispielsweise Wasser/Glykol-Gemische als Kühlmittel verwendet werden können.

Durch die Membranen diffundierendes Wasser wird durch Anlegen einer elektrischen Spannung an den gasentwickelnden Elektroden zu Wasserstoff bzw. Sauerstoff zersetzt.

Auch bei dem Ausführungsbeispiel der Fig. 4 werden wieder eine separate Kationentauscherpackung 48 und Anionentauscherpackungen 49 verwendet. Die Elektroden sind als Membran/Elektrodeneinheit ausgebildet. So liegt die Anode 50 mit einer zwischengeschalteten kationenpermeablen Membran 51 unmittelbar an der Kationentauscherpackung 48 an, während die Katode 52 mit einer anionenpermeablen Membran 53 an der Anionentauscherpackung 49 anliegt. Der Konzentratstrom 28 wird in einem Kanal zwischen den Packungen 48 und 49 geführt und ist durch eine kationenpermeable Membran 54 bzw. eine anionenpermeable Membran 55 begrenzt.

Die Elektroden können als Gasdiffusionselektroden ausgebildet sein.

Schließlich zeigt Fig. 5 eine Variante des Brennstoffzellenaggregats 10 der Fig. 1, bei welcher der Konzentratstrom 28 als Sekundärkühlkreislauf 56 dient. Die Komponenten, die bereits im Zusammenhang mit der Variante der Figur 1 beschrieben wurden, sind mit den gleichen Bezugsziffern bezeichnet und werden hier nicht mehr erläutert. Der Konzentratstrom 28 nimmt in dem Wärmetauscher 22 Wärme aus dem Diluatstroms 27 auf. Der gekühlte Diluatstrom 27 wird der Elektrodeionisationszelle 23 zugeführt. Der erwärmte Konzentratstrom wird zunächst über einen Hauptwärmekühler 57 geleitet und nach Abkühlung ebenfalls der Elektrodeionisationszelle zugeführt. In dem Sekundärkühlkreislauf 56 ist eine Förderpumpe 58 angeordnet. Über eine Leitung 59 können bei Bedarf Wasserverluste in dem Sekundärkühlkreislauf 56 ersetzt werden. Wird die Brennstoffzelle mit reinem Wasserstoff und Sauerstoff gespeist, kann ein Teil des als Reaktionsprodukt anfallenden Wassers aus den Leitungen 14, 15 über die Leitung 59 in den Sekundärkühlkreislauf 56 eingespeist werden.

## Patentansprüche

1. Verfahren zum Entionisieren eines in einem ersten Kühlkreislauf zirkulierenden Kühlmediums einer Brennstoffzelle, wobei man das Kühlmedium intermittierend elektrochemisch entionisiert, indem man die Leitfähigkeit des Kühlmediums misst und sobald man einen Anstieg der Leitfähigkeit des Kühlmediums registriert, Spannung an die Elektroden einer in dem ersten Kühlkreislauf angeordneten elektrochemischen Zelle anlegt.

2. Verfahren gemäß Anspruch 1, **dadurch gekennzeichnet, dass** man beim Entionisieren das Kühlmedium als Diluatstrom durch eine Elektrodeionisationszelle führt.

3. Verfahren gemäß Anspruch 2, **dadurch gekennzeichnet, dass** man den Diluatstrom vor dem Entionisieren abkühlt.

4. Verfahren gemäß Anspruch 3, **dadurch gekennzeichnet, dass** man einen Konzentratstrom der Elektrodeionisationszelle in einem zweiten Kühlkreislauf abkühlt und anschließend zum Abkühlen des Diluatstroms verwendet.

5. Brennstoffzellenaggregat (10) mit wenigstens einer Brennstoffzelle (11) und einem ersten Kühlkreislauf (20) für die Brennstoffzelle, **dadurch gekennzeichnet, dass** in dem Kühlkreislauf (20) wenigstens eine Elektrodeionisationszelle (23) angeordnet ist, die von einem als Kühlmedium dienenden Diluatstrom (27) und einem Konzentratstrom (28) durchströmt wird, wobei in dem Kühlkkreislauf ein Leitfähigkeitssensor (24) angeordnet ist, der über einen Schalter (25) eine von einer Spannungsquelle (26) gelieferte Gleichspannung auf die Elektroden der Elektrodeionisationszelle (23) schaltet.

6. Brennstoffzellenaggregat (10) gemäß Anspruch 5, **dadurch gekennzeichnet, dass** der Konzentratstrom (28) in einem zweiten Kühlkreislauf (56) geführt wird, wobei stromaufwärts von der Elektrodeionisationszelle (23) ein Wärmetauscher (22) angeordnet ist, welcher den ersten und den zweiten Kühlkreislauf (20,56) thermisch koppelt.

7. Brennstoffzellenaggregat gemäß einem der Ansprüche 5 oder 6, **dadurch gekennzeichnet, dass** die Elektrodeionisationszelle (23) ein von dem Diluatstrom (27) durchströmtes Mischbett (29,30) aus Anionen- und Kationentauscherharzen umfasst.

8. Brennstoffzellenaggregat gemäß einem der Ansprüche 5 bis 7, **dadurch gekennzeichnet, dass** die Elektrodeionisationszelle eine von dem Diluatstrom (27) durchströmte erste Kammer mit einem Kationentauscherharz (41;48) und eine zweite Kammer mit einem Anionentauscherharz (42;49) umfasst.

9. Brennstoffzellenaggregat gemäß Anspruch 8, **dadurch gekennzeichnet, dass** eine bipolare Membran (43) zwischen der ersten Kammer und der zweiten Kammer angeordnet ist.

## Claims

1. A process for the deionization of a fuel cell cooling medium circulating in a first cooling circuit, wherein the cooling medium is subjected to intermittent electrochemical deionization by measuring the conductivity of the cooling medium and, as soon as an increase in the conductivity of the cooling medium is recorded, applying voltage to the electrodes of an electrochemical cell arranged in the first cooling circuit.

2. The process according to claim 1, wherein the cooling medium is passed as diluate stream through an electrode ionization cell during the deionization.

3. The process according to claim 2, wherein the diluate stream is cooled before the deionization.

4. The process according to claim 3, wherein a concentrate stream from the electrode ionization cell is cooled in a second cooling circuit and subsequently used for cooling the diluate stream.

5. A fuel cell assembly (10) having at least one fuel cell (11) and a first cooling circuit (20) for the fuel cell, wherein at least one electrode ionization cell (23), through which a diluate stream (27) serving as cooling medium and a concentrate stream (28) flow, is arranged in the cooling circuit (20), a conductivity sensor (24), which switches, via a switch (25), a direct voltage supplied by a voltage source (26) onto the electrodes of the electrode ionization cell (23), being arranged in the coding circuit.

6. The fuel cell assembly according to claim 5, wherein the concentrate stream (28) is circulated in a second cooling circuit (56), with a heat exchanger (22) which thermally couples the first and second cooling circuits (20, 56), being arranged upstream of the electrode ionization cell (23)

7. The fuel cell assembly according to either of claims 5 or 6, wherein the electrode ionization cell (23) comprises a mixed bed (29, 30) comprising anion and cation exchanger resins through which the diluate stream (27) flows.

8. The fuel cell assembly according to any one of claims 5 to 7, wherein the electrode ionization cell comprises a first chamber containing a cation exchanger resin (41; 48), through which the diluate stream (27) flows, and a second chamber containing an anion exchanger resin (42; 49).

9. The fuel cell assembly according to claim 8, wherein a bipolar membrane (43) is arranged between the first chamber and the second chamber.

## Revendications

1. Procédé de désionisation d'un milieu réfrigérant, circulant dans un premier circuit de réfrigération, d'une pile à combustible, dans lequel on désionise le milieu réfrigérant de manière intermittente par voie électrochimique, en mesurant la conductibilité du milieu réfrigérant et, aussitôt qu'on enregistre une croissance de la conductibilité du milieu réfrigérant, en appliquant une tension aux électrodes d'une cellule électrochimique agencée dans le premier circuit de réfrigération.

2. Procédé suivant la revendication 1, **caractérisé en ce que**, lors de la désionisation, on conduit le milieu réfrigérant sous la forme de courant de produit dilué au travers d'une cellule d'électrodésionisation.

3. Procédé suivant la revendication 2, **caractérisé en ce qu'**on refroidit le courant de produit dilué avant la désionisation.

4. Procédé suivant la revendication 3, **caractérisé en ce qu'**on refroidit un courant de produit concentré de la cellule d'électrodésionisation dans un deuxième circuit de réfrigération et on l'utilise ensuite pour le refroidissement du courant de produit dilué.

5. Appareillage de pile à combustible (10) comprenant au moins une pile à combustible (11) et un premier circuit de réfrigération (20) pour la pile à combustible, **caractérisé en ce que**, dans le circuit de réfrigération (20), est agencée au moins une cellule d'électrodésionisation (23) qui est traversée par un courant de produit dilué (27) servant de milieu réfrigérant et par un courant de produit concentré (28), un détecteur de conductibilité (24), qui, par l'intermédiaire d'un commutateur (25), commute une tension continue fournie par une source de tension (26) aux électrodes de la cellule d'électrodésionisation (23), étant agencé dans le circuit de réfrigération.

6. Appareillage de pile à combustible (10) suivant la revendication 5, **caractérisé en ce que** le courant de produit concentré (28) est guidé dans un deuxième circuit de réfrigération (56), un échangeur de chaleur (22), qui couple thermiquement le premier circuit de réfrigération (20) et le deuxième (56), étant agencé en amont de la cellule d'électrodésionisation (23).

7. Appareillage de pile à combustible suivant l'une des revendications 5 et 6, **caractérisé en ce que** la cellule d'électrodésionisation (23) comporte un lit mélangé (29, 30) de résines échangeuses d'anions et de cations qui est traversé par le courant de produit dilué (27).

8. Appareillage de pile à combustible suivant l'une des revendications 5 à 7, **caractérisé en ce que** la cellule d'électrodésionisation comporte un premier compartiment, qui contient une résine échangeuse de cations (41; 48) et est traversé par le courant de produit dilué (27), et un deuxième compartiment, qui contient une résine échangeuse d'anions (42; 49).

9. Appareillage de pile à combustible suivant la revendication 8, **caractérisé en ce qu'**une membrane bipolaire (43) est agencée entre le premier compartiment et le deuxième compartiment.
